# EUROPEAN PATENT SPECIFICATION

(11) **EP 0 293 860 B1**
(45) Date of publication and mention of the grant of the patent: **28.02.1996**
(21) Application number: 88108783.7
(22) Date of filing: 01.06.1988
(51) Int. Cl.: G06F 13/28, G06F 13/12

(54) **Peripheral controller and adapter interface**
Peripheriesteuerungsmodul und Adapterschnittstelle
Module de commande périphérique et interface pour adaptateur

(30) Priority: 03.06.1987 US 57553
(43) Date of publication of application: 07.12.1988
(73) Proprietor: Bull HN Information Systems Inc., Billerica, MA 01821-4186 (US)
(72) Inventor: Lewis, Richard P., Sandown New Hampshire 03873 (US); Klashka, John A., North Andover Massachusetts 01845 (US); Kaufman, S.L., Stoughton Massachusetts 02072 (US); Kowal, Krzsztof A., Framingham Massachusetts 01701 (US); McNamara, John L., Tewksbury Massachusetts 01876 (US); Douglass, Arthur M., Hollistown Massachusetts 01746 (US)
(74) Representative: Frohwitter, Bernhard, Dipl.-Ing.

(56) References cited:
- EP-A- 0 165 915
- GB-A- 1 156 641
- US-A- 4 079 452

## Description

### Background of the Invention

In many data processing systems, a common bus is used to link together a plurality of units to the system. The bus permits any two units linked to the system to communicate or transfer information between each other.

Typically, communication is established by any unit by making a request to the bus for a bus cycle. When that bus cycle is granted, the requesting unit becomes the master and may address any other unit, linked to the bus, as a slave.

Transfers requiring a response from a slave unit, such as a read memory transfer from the slave, require a response cycle. In these cases, the master indicates a response is required and identifies itself to the slave. When the required information becomes available, the slave will assume the role of the master and initiate a transfer of information to the requesting unit. Thus, with such an interchange, two bus cycles are required. During the time it takes the slave to respond, other units may use the bus to communicate with any other unit that does not involve the master-slave units above. In the event that two units request simultaneous service from the bus, tie-breaking logic may be included at each unit directly coupled to the bus.

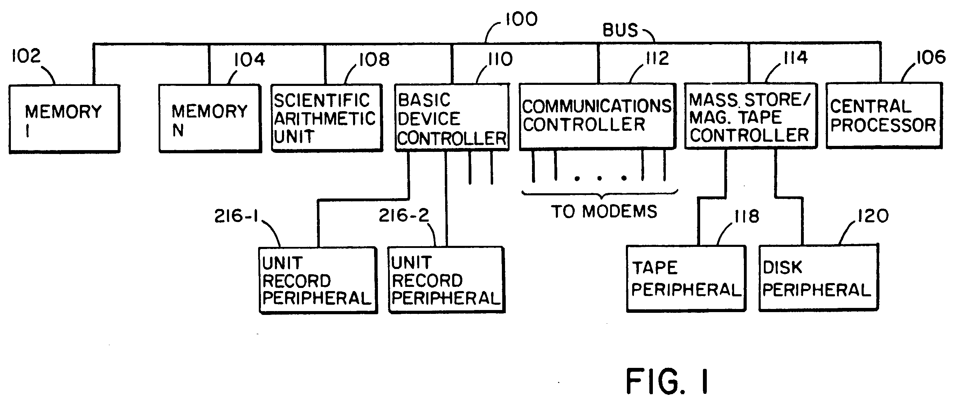

A typical data processing system utilizing a common bus is shown in Figure 1. As shown, a bus 100 which often comprises multiple lines, is coupled to a memory storage unit 102. The memory storage unit may comprise several memory storage units, each in communication with the bus. Also connected to this data processing system is a scientific-arithmetic unit 108 and three controllers: a basic device controller 110, a communications controller 112, and a mass store/magnetic tape controller 114. The basic controller 110 is coupled to the bus to allow multiple unit record peripheral devices 116 to have access to the bus 100. Using the basic controller in this manner avoids larger demands on the bus that would result if each unit record peripheral device had a direct access to the bus. Similarly, a communications controller 112, which is used to provide communication control via modem devices, and a mass store/magnetic tape controller 114, which is used to control mass storage devices such as a tape peripheral device 118 or a disk peripheral device 120, is in communication with the bus 100.

In addition to the above devices, a central processor 106 is connected to the bus for controlling the bus cycles and regulating data transferred over the bus. Thus, any one of these devices which are coupled to the bus 100 may address or communicate with any other unit connected to the bus 100. For example, the tape peripheral 118 may address the memory storage unit 102 by way of the controller 114.

To insure that the proper unit is addressed by a master unit, a channel number exists for every end point in the system with the exception of the memory type processing elements. In those cases, a channel number is assigned to each device along with the memory address identifying the end point. Some devices, such as a full duplex device, utilize two channel numbers. Others, such as an output only or an input only device, use only one channel each. Units with multiple inputs and outputs ports generally require a block of consecutive channel numbers to distinguish between the different ports.

With such a system, different priorities are established for accessing the bus. For example, when a peripheral has access to the bus via a controller, all other peripherals connected to this controller would be locked out or denied access to the bus.

Further details regarding the above type of bus system is disclosed in the following U.S. patents. The referenced patents pertain to the proprietary bus system of Honeywell.
(a) Data Processing System Providing Split-Bus Cycle Operation by Frank V. Cassarino, Jr. et al, issued December 14, 1976, and having U.S. Patent No. US-A-3 997 896.
(b) Data Processing System Providing Locked Operation of Shared Resources by George J. Barlow et al, issued December 28, 1976, and having U.S. Patent No. US-A-4 000 485.
(c) Data Processing System Having Distributed Priority Network by George J. Barlow, issued June 14, 1977, and having U.S. Patent No. US-A-4 030 075.
(d) Data Processing System Having Distributed Priority Network with Logic for Deactivating Information Transfer Requests by George J. Barlow, issued June 20, 1978, and having U.S. Patent No. US-A-4 096 569.
(e) Apparatus for Processing Data Transfer Requests in a Data Processing System by Frank V. Cassarino, Jr. et al, issued November 23, 1976, and having U.S. Patent No. US-A-3 993 981.
(f) Data Processing System Having a Data Integrity Technique by George J. Barlow, issued November 30, 1976, and having U.S. Patent No. US-A- 3 995 258.

The European patent application EP-A- 0 165 915 discloses a peripheral interface system having three interoperative units to carry out a DMA transfer of data, namely, an I/O processor, a channel multiplexer and one controller unit for each peripheral. All these units through which data must be transferred between the peripherals and main memory include data buffers which hold, and through which must pass, the transferring data. Using the intervening buffers, data is not transferred in a single multiplex cycle between a controller and main memory, but, instead pass, in tandem, through the buffers of the multiplexers and the I/O processor.

It is the object of our invention to speed up the overall data transfer rate between the aggregate of such peripheral devices and the main memory and to simplify the associated operation and controlling apparatus structure.

This object is achieved in the peripheral controller and adapter interface according to the characteristic features of claim 1. Further advantageous embodiments may be taken from the subclaim.

The present invention is preferably used in a computer system having a system bus, a main memory connected to the system bus and a plurality of peripheral devices connected to the bus. A controller is coupled to the bus for transferring data between each of the plurality of peripheral devices and main memory in direct memory access (DMA) operations. The peripheral controller and adapter interface of this invention isolates into separate units the separate functions of DMA data transfer control and the I/O data transfer operations of the respective peripheral devices, which data transfer operations include the buffering of data being transferred between the main memory and each peripheral device. By providing such separation, the overall data transfer rate between the aggregate of such peripheral devices and the main memory is speeded and the associated operation and controlling apparatus structure is simplified.

The foregoing and other objects, novel features, and advantages of the invention will be better understood and apparent from the following more particular description when considered in connection with the accompanying drawings.

### Brief Description of the Drawings

Figure 1 is a schematic drawing of a computer system utilizing a bus architecture.

Figure 2 is a block diagram of a computer system embodying the present invention.

Figure 3 is a more detailed block diagram of elements of Figure 2.

Figure 4 is an illustration of the connection between the controller of Figure 3 and an adapter to show the signals between the controller and an adapter in one example implementation.

Figure 5 is an electrical schematic diagram of a typical adapter to be connected to the controller of Figure 3.

Figure 6 is a timing diagram illustrating the transfer of status data from the adapter to the controller.

Figure 7 is a timing diagram of the transfer of command data from the controller to an adapter.

Figure 8A is a timing diagram of a transfer of information from the adapter to main memory in a DMA operation.

Figure 8B is a flowchart illustrating the transfer of Figure 8A.

Figure 9A is a timing diagram of a transfer of data from main memory to an adapter in a DMA operation.

Figure 9B is a flowchart of the data transfer of Figure 9A.

### Detailed Description of the Invention

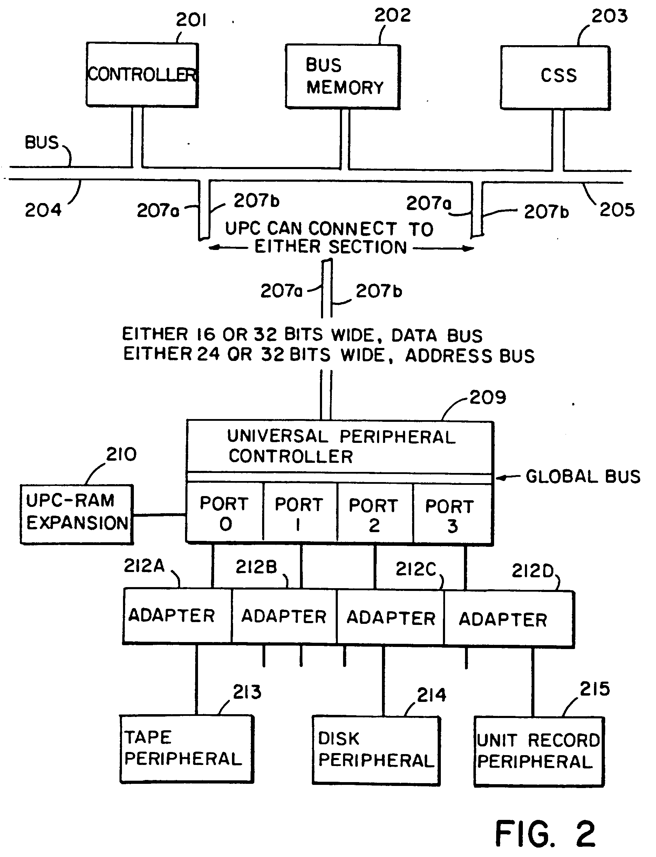

In accordance with the present invention, a universal peripheral controller (UPC) 209 is provided. The UPC may control different types of peripheral devices without requiring different controlling devices. As shown in Figure 2, the UPC 209 is coupled to a system bus 204 by a data bus 207a and an address bus 207b. The UPC may be coupled along the system bus 204 so that it receives a higher priority status than other devices coupled to the system bus 204. The data bus 207a may be either 16 or 32 bits wide, and the address bus 207b 24 or 32 bits wide. With such an interface assembly, communication may be made to and from any peripheral coupled to the system bus through the UPC.

The UPC 209 may interface with up to four peripheral adapters 212, A-D, where each adapter has one or more channels. A total of up to eight logical channels are accessible through each UPC. Typical peripherals which may be coupled to the adapters 212, as shown, include a tape peripheral 213, a disk peripheral 214, and a unit record peripheral 215. To insure proper data rate synchronization and error detection, each adapter provides a buffer for data storage.

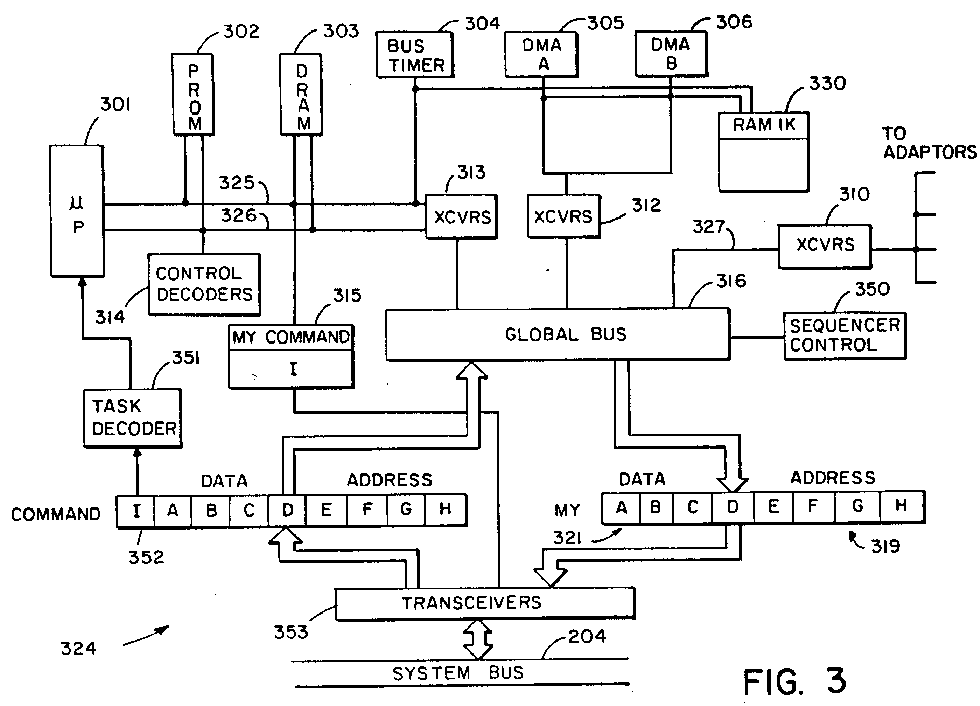

A more detailed block diagram of the Universal Peripheral Controller 209 is shown in Figure 3. A commercially available Motorola 68000 type microprocessor 301 is coupled to an internal data bus 325 and an address bus 326. Coupled to the data bus 325 is a commercially available read only memory (PROM) 302, a commercially available dynamic random access memory (DRAM) 303, and a MY COMMAND register 315. The DRAM 303 may have storage capacity for at least 64K words and is provided with random logic implementation to refresh information stored therein. The PROM 302, the DRAM 303, as well as commercially available control decoders 314 are coupled to the address bus 326.

A commercially available timer 304 is coupled to the data bus 325 for providing three functions. The first function of the timer 304 is to detect responses to a request for the global bus 316 (discussed below). If there is no response to a request, then the timer 304 is to notify the microprocessor 301. The second function of the bus timer 304 is to determine if the instruction being executed takes longer than a predetermined value and to determine whether it must abort the execution of the instruction. Finally, the third function of the bus timer 304 is to determine if there is a DMA request cycle which takes longer than a predetermined period and to abort that DMA cycle if such a case exists (discussed in detail below).

A global bus 316 is coupled to the data bus 325 and the address bus 326 by way of commercially available transceivers 313. The global bus 316 is, in turn, coupled to an interface 324 of the system bus 204. Within the system bus interface 324, there are command registers 352 for receiving data from the system bus, each having 9 bits including a parity bit P. The registers 352 comprise a control register I, data registers A, B, C and D and address registers E, F, G and H. Commercially available transceivers 353 are also included in the system bus interface 324. The global bus 316 is also coupled to the adapters 212 of Fig. 2 via commercially available transceivers 310.

A MY ADDRESS REGISTER 319 and MY DATA REGISTER 321 are coupled to the global bus 316. These registers each have 4 bytes. MY DATA REGISTER 321 has bytes A, B, C and D, each 9 bits wide including a parity bit. MY ADDRESS REGISTER 319 similarly has 4 bytes E, F, G and H each 9 bits wide including a parity bit. The bytes of the MY DATA and MY ADDRESS REGISTERS A to D and E to H, respectively, correspond to the command data and address registers 352 A to H. Also coupled to the global address and data bus 316 are two commercially available DMA chips 305 and 306 by way of transceivers 312.

The essential feature of the peripheral controller 209 is to have the microprocessor set up the paths between the devices attached to the adapters 212A-D and other units connected to the system bus 324, including the system's memory. Once the microprocessor 301 has set up the communication link between a given peripheral and the system memory, it turns over the task of managing the transfer to one of the DMA devices 305, 306 associated with that device. Access to the global bus from various adapters is controlled in a round-robin fashion. The addresses and ranges of data transfer for the DMA chips 305 and 306 are provided by the microprocessor via transceivers 312, 313 and the global bus 316.

A typical request for service via the system bus and its subsequent response by the DMA chip controller sequencer system may be accomplished in the following manner. When a request is received by the multiple DMA controller system (discussed below), which identifies a channel number of the system, the information is stored in a task decoder 351 coupled to the system bus 324. The data and the address pertaining to this request will be stored in MY DATA REGISTER 321 and MY ADDRESS REGISTER 319 as they arrive. The task decoder 351 determines the particular ports/channels that this new request is to service. The microprocessor 301 then determines whether or not that particular channel identified by the request is available, and it signals RAMWARE means (not shown) that a request had been received for a particular adapter. (The RAMWARE means is the subject of Patent No. US-A-4 803 623, assigned to the same assignee as the instant invention, filed on October 31, 1986 as Serial No. 925,431 and having the title "Universal Peripheral Controller Self-Configurating/Bootloadable Ramware," invented by John Klashka et al of which EP-A-0 273 136 is a patent family member.) The microprocessor 301 then links up the particular DMA chip, 305 or 306, that is to handle the request and sets up the parameters that the chip will require, such as the starting address, the range address, as well as other parameters.

For example, in the case of an adapter able to access words 16 data and 2 parity bits wide, the particular adapter involved in the transfer makes a request which is placed on the internal bus 327 by way of the transceivers 310. This request is received by a sequence controller 350 (discussed in greater detail below) which grants access to the global bus 316. The DMA chip then notifies the system bus memory 202 (shown in Figure 2) that it is ready to transfer information between a particular location in memory and between the adapter's buffer memory. The information requested from a particular location in memory will be applied to the system bus interface 324 and made available to the global bus 316. As previously discussed, the information available on the system bus interface 324 will be up to 4 bytes wide. These four bytes are broken up into two word transfers. In the case of an adapter being able to only access a byte, four separate transfer operations are required by way of the DMA chip 305 or 306, the MY REGISTERs 319,321, the global data and address bus 316, and the transceivers 310.

The purpose of the sequencer 350 is to provide equal access to the global bus to all of the adapters in a round-robin fashion rather than granting the global bus to the unit having the highest priority, which could block lower priority units from accessing the global bus 316 for considerable periods of time.

The sequencer 350 provides a round-robin access to the global bus 316 by first examining or polling the first adapter 212A to determine whether there is any information to be transferred to or from it. If there is information to be transferred to or from the first adapter 212A, access to the global bus 316 is granted to it. Preferably, up to 4 bytes is allowed to be transferred to and from an adapter per sequence. The sequence controller 350 will then advance to the next adapter 212B to determine whether it has a request for service. If it does, it will be serviced in a similar manner as the first adapter 212A. If there is no information that is to be transferred to this adapter, then the sequencer proceeds to the next adapter until all the adapters have been examined for service request and then serviced up to 4 bytes at a time. After the last adapter in the sequence has been examined, the sequencer 350 returns back to the first adapter 212A. Thus, each adapter is serviced in a round-robin fashion.

Integrated into the round-robin sequencing for servicing each adapter is a sequence dedicated to the microprocessor. Preferably, the microprocessor is serviced between successive adapters. Providing the microprocessor 301 access to the global bus 316 allows the microprocessor 301 to service anticipated or unsolicited interrupts from other peripheral devices, internal or external to the UPC 209.

Details of the sequencer are provided in an application entitled "Bus Activity Sequence Controller" filed concurrently herewith by John Klashka et al and published as US-A-4 896 266.

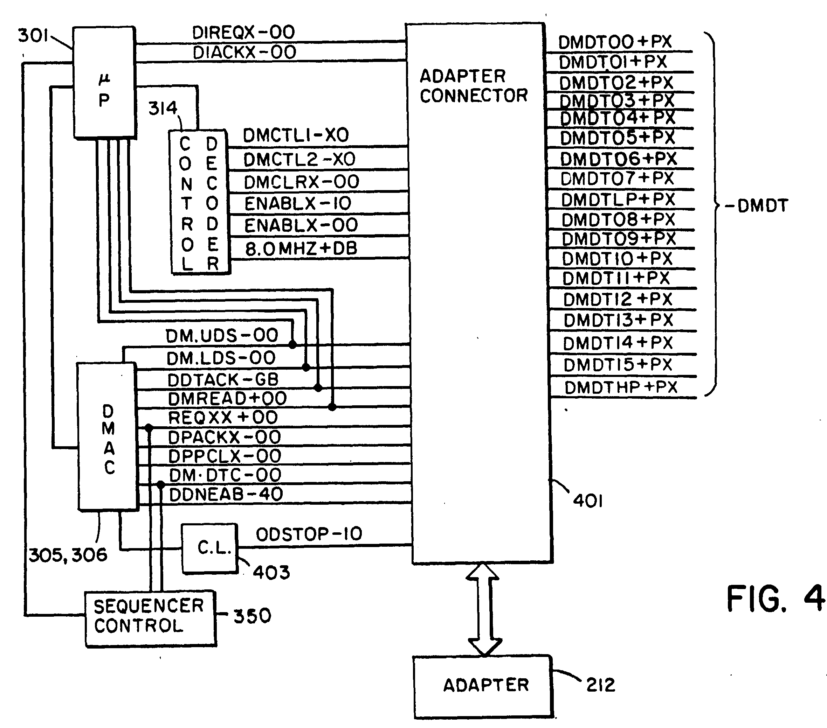

Figure 4 shows an adapter connector 401 which is a physical interface between an attached adapter 212, microprocessor 301, and the DMAC 305,306. The adapter connector 401 provides connections to the adapter which are necessary for the "handshaking" between the DMA chip, the buffer of the adapter, and the main memory of the computer system. The adapter connector 401 is also responsible for providing connections for command signals which will set up the adapter for receiving particular command sets for particular peripheral devices connected to the adapter. For example, a different protocol is required when a tape is serviced, as compared with the protocol for a printer.

The microprocessor 301 maintains a device specific file which provides the command set information required for communicating with each peripheral in the DRAM 303. The file is loaded to the DRAM 303 from main memory at the initial start-up of the system. At start-up, the microprocessor 301 reads an identifier byte from the adapter, as will be described below, and stores that identifier in a scratch pad memory associated with the particular port.

When there is a data transfer from the main memory to an adapter, commands are sent to the microprocessor over the system bus. The microprocessor then sends control information to the adapter by way of the adapter interface to set it up to receive the data. The microprocessor will also send control parameters to the DMAC channel that is associated with that particular port.

At the adapter interface 401 in Figure 4 a group of control lines is designated to transfer the control information from the microprocessor 301. Several of the microprocessor control signals are generic control lines which come directly from the microprocessor through isolation buffering, namely a read/write line DMREAD, an upper data strobe line DM.UDS, a lower data strobe line DM.LDS, an interrupt request line DIREQX, a microprocessor interrupt acknowledge line DIACKX and a data transfer handshake line DDTACK. An X in a signal name is intended to designate one of the four possible adapters by 0, 1, 2 or 3. All signals without an X are shared by the four adapters.

The read/write line DMREAD, depending on the logic state of the signal, determines if the type of operation to be performed is a reading of data from the adapter or a writing of data to it.

The upper and lower strobe lines DM.UDS and DM.LDS, when asserted, are used to determine if the data on the upper or lower bits of a data word (16 bits plus parity) on the data line is valid. In other words, if the signal on the lower data strobe line is logic true, then the data bits 0-7 plus parity are valid. When the upper data strobe signal is true, bits 8-15 plus parity are valid. Thus, it is permissible to transfer 8 or 16 bits with parity through the interface.

When the request line DIREQX is asserted, the adapter will interrupt the normal flow of the microprocessor and call an exception handler. The exception handler would allow the processing of special events such as in requesting a data transfer from the UPC 209.

The microprocessor acknowledge line DIACKX is the handshake line that informs the adapter that the adapter interrupt signal has been acknowledged by the microprocessor 301. The data handshake line DDTACK is the line that the adapter asserts when the data sent to the adapter has been taken during a write cycle or when data from the adapter is valid during a read cycle. In essence, it acknowledges that the information has been received or transmitted directly. This line is required to terminate the instruction cycle. This line is also used by the DMAC during DMA operations, but is asserted by the UPC.

Other microprocessor control lines are derived by the control decode logic 314 using the signals provided from the microprocessor 301. These micro-processor control signals include four unique control signals DMCTL1-X0, DMCTL2-X0, ENABLX-10, and ENABLX-00, a master clear line DMCLRX, and a clock line 8.0 MHZ. The four unique control lines are generated by encoding the 24 bit address lines from the microprocessor 301. The advantage of reducing the 24 address lines to four unique control lines is that fewer leads at the adapter connector 401 are required and space required for decoding the 24 address lines at each adapter is saved.

With four control lines ENABLX-00, ENABLX-10, DMCTL1, and DMCTL2, various combinations of control functions can be created at the adapter connector 401. The system recognizes six of those control functions created at the adapter connector 401. An adapter designer is then free to implement any one of the six control functions in conjunction with data lines DMDTXX to read or write to the adapter. For example, if a command byte is to be sent to the adapter 212A (Figure 2) at port A₀, one of the six control signals might be asserted with a specific data combination of signals on the data lines DMDTXX. In turn, the combined signals will prime the adapter to perform an operation such as a tape read operation. Thus, the control lines are used in conjunction with the data lines to implement specific functions at the adapter. The actual function implemented by that control function, however, may be a matter of design choice for a given adapter. In other words, a designer may choose how the six available control functions for controlling peripheral devices will be implemented.

The master clear line DMCLRX, which is another control line derived by logic 314 (Figure 3), is used for providing a reset pulse. When a reset pulse is asserted, the adapter is caused to initialize itself and go into a known state.

The clock line, 8.0 MHZ, provides a buffered clocking signal which allows synchronous operation of the adapter with the system. Preferably, the clock driving the clocking signal is an 8 mega-hertz clock which is the same frequency as the clock which drives the entire UPC system.

Once the DMAC is conditioned to transfer data, a second group of inputs for coupling control lines from the DMAC is provided at adapter connector to provide signals to the adapter for executing the transfer. Control lines associated with the DMAC include the read/write line DMREAD, the upper and lower strobe lines DM.UDS and DM.LDS, and the handshake line DDTACK. The operation of these lines, which are directly coupled to both the DMAC and the microprocessor, have been discussed above. Other DMAC control lines include a request control line REQXX, an acknowledge line DPACKX, a demand line DPPCLX, a data cycle line DM.DTC, and a last data DMAC control line DONEAB.

For the case where the adapter is ready to receive data after being conditioned by the micro-processor 301 (Fig. 3), the adapter asserts the request line DPPCLX. In turn, the acknowledge line DPACK is asserted from the DMAC to the adapter to tell it that its request for the global bus is acknowledged. When the request is honored by the UPC through the sequencer 350, the request line REQXX is asserted to indicate to the adapter that access to the global bus has been granted. The UPC will also respond to the request by asserting the handshake line DDTACK to the DMAC to acknowledge that the cycle is complete to that point. The DMAC will then assert the data strobe lines DM.UDS and DM.LDS to tell the adapter which data bytes are valid during the transmission of data from the main memory. At the end of that cycle, the DMAC asserts the data cycle line DM.DTC to inform the adapter that the data transfer is finished for that data sequence (1-4 bytes). A similar scheme may be employed when data is transferred from the adapter.

As each transfer is performed, the DMAC increments its address and decrements its range in order to keep track of the amount of data transferred. If the data transfer range has been exhausted, the DMAC control line DONEAB is asserted to tell the adapter that the transfer is finished. It can also be asserted by the adapter when it determines that the transfer is completed because there would be instances where the storage record size of the peripheral is smaller than the range transmitted from it. Thus, this control is a bidirectional control.

The last DMA control signal is a memory odd stop line ODSTOP. The memory odd stop line ODSTOP is generated by the adapter for use on word transfers to indicate to the UPC 209 that, when this particular transfer is terminated, only one byte of data is valid.

The data connections or the data lines DMDTXX are direct connections to the global bus, and can either be connected to the transceiver 313 coupled to the microprocessor or to the megabus data registers directly.

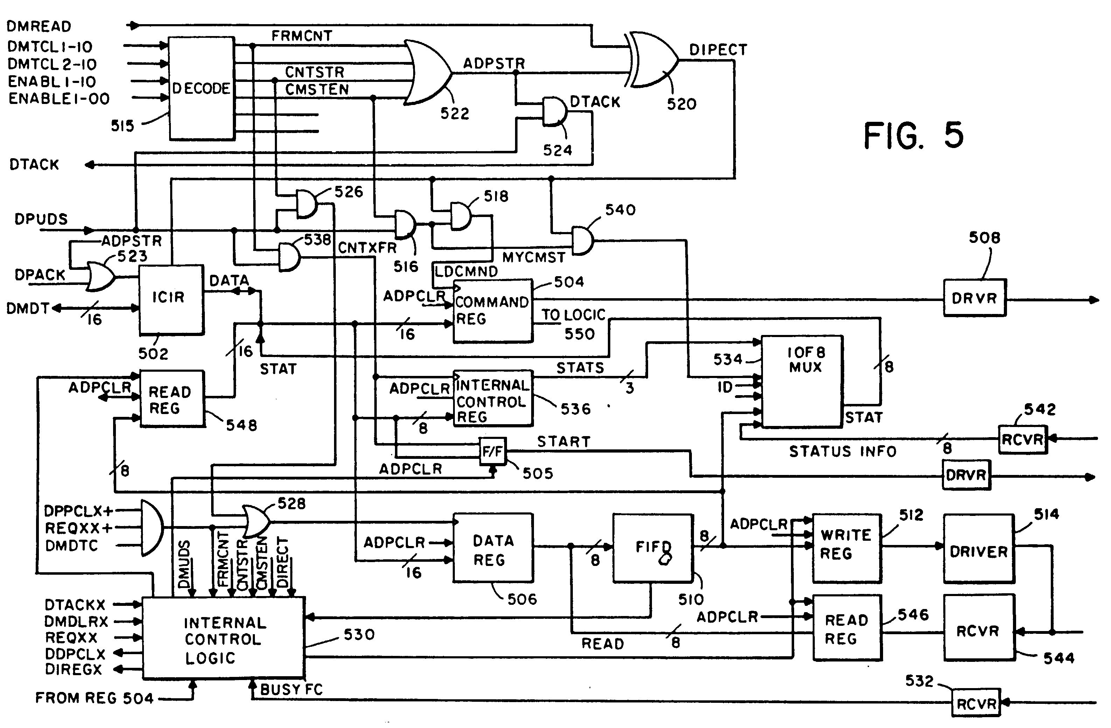

An adapter designed for controlling a GCR tape storage unit is illustrated in Figure 5. It should be recognized that the design of any adapter is a function of the particular peripheral unit being controlled. The adapter designer takes into consideration the protocol established for communication with the universal peripheral controller and the requirements of the peripheral device. The designer designs the hardware of the adapter in conjunction with RAMWARE to be loaded into the DRAM 303 for handling communications with the adapter.

The particular adapter shown in Figure 5 includes a set of registers for holding command instructions for transfer between the UPC and a device, for retaining internal instructions for control of the adapter and for holding data to be transferred between the UPC and the device. The adapter further includes logic for controlling the transfer of the information. A first-in first-out (FIFO) device is also provided in order to buffer data transmissions between the UPC and peripheral device. These elements of the adapter will be described in further detail below.

Both command and data information is transferred to the UPC through a transceiver 502. Typically, the command information is transferred during a MPU cycle of the sequence controller 350 and is stored in a command register 504, an internal control register 536, or flip-flops such as the START flip-flop 505. Typically, data is transferred into a data register 506 during DMA operations, but that data may be transferred during a CPU cycle. Command instructions stored in the command register 504 can be transferred to the peripheral device through a driver 508. Data in the register 506, however, is first passed through a FIFO 510 before it is latched into a write register 512 and directed to the peripheral device through a driver 514. The FIFO allows the receipt of data during a DMA operation at a rate faster than that at which the peripheral device can receive the data.

During a MPU cycle, latching of instructions or data into registers 504, 536 and 506 is controlled through logic shown at the top of Figure 5. Decoder circuitry 515 receives the two control signals DMCTL and the two enable signals ENABLX and decodes those signals into one of six internal command signals. In latching the command register, for example, one of those internal control signals CMSTEN is applied to an AND gate 516 with the upper data strobe. The output of that AND gate is applied to a second AND gate 518 with a directional signal DIRECT to generate the clock to the command register. The directional signal indicates whether data is being transferred from the UPC to the adapter or in the reverse direction. DIRECT is the output of an exclusive OR gate 520 which receives as its inputs the DMREAD signal from the UPC and a signal from OR gate 522 which is true when any of the first four internal control signals are generated by the decoder 515. The direction signal is also applied to the transceiver 502 to establish the transceiver as either a receiver or a transmitter.

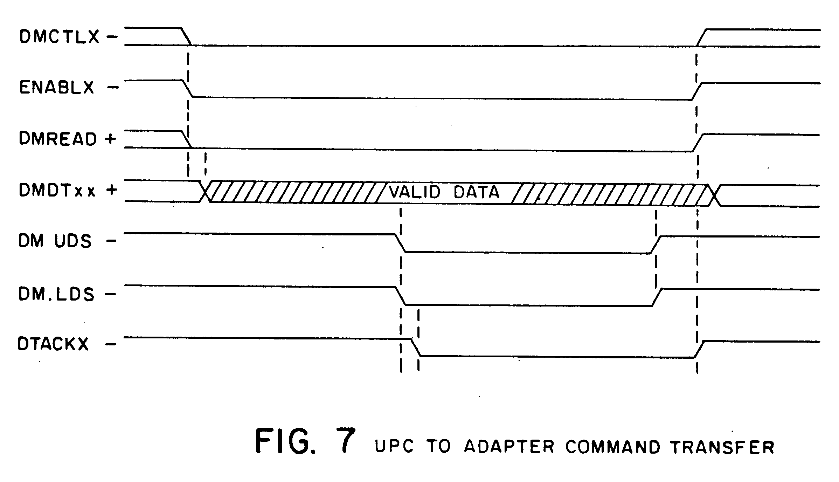

Thus, the transfer of command data from the UPC to the adapter is as illustrated in the timing diagram of Figure 7. The control and enable inputs and the DMREAD input to the adapter are set for the particular operation by the MPU 301 of the UPC. For a transfer to the command register 504, for example, the control signal CMSTEN is made ready. The direction of the transceiver 502 is thus set through gates 522 and 520. The transceiver 502 is also enabled by the output of the OR gate 522, so data on the input to the transceiver 502 from the global bus is made available at the input to the command register 504. Then, with the data strobe, the command register is clocked through the gates 516 and 518. The data strobe is also applied to an OR gate 524 with the output of the OR gate 522 to generate an acknowledge signal DTACK which is returned to the UPC.

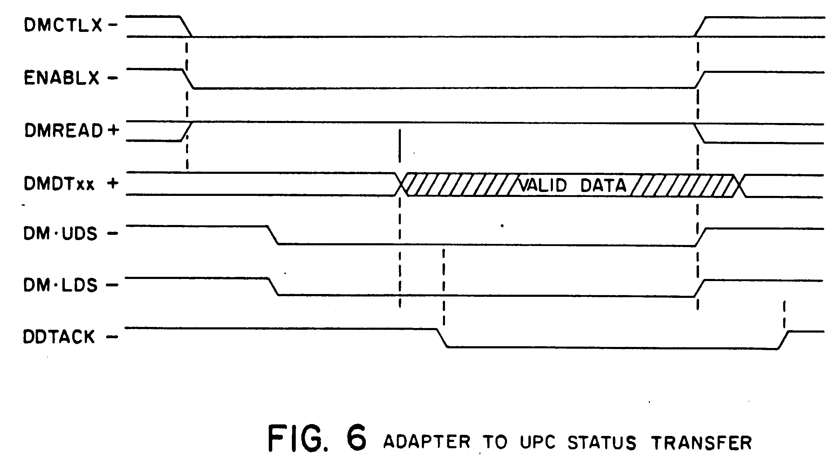

During a cycle of the microprocessor 301, the microprocessor may obtain information such as status information from the peripheral device in an operation illustrated by Figure 6. This is accomplished by means of a multiplexer 534 which has as its input eight bytes of information, each of which is selectable by an input STATS from the internal control register 536. At least one byte of status information is applied to the multiplexer from the peripheral device through receivers 542. The select signal STATS to be applied to the multiplexer 534 is first loaded into the internal control register 536 by the micro-processor 301. To that end, the microprocessor asserts control signals DMCTL and ENABL to produce the control signal FRMCNT. The control signal FRMCNT is passed through OR gate 522 and is applied to the exclusive OR gate 520 with the DMREAD signal. The output of the exclusive OR gate 520 sets the direction of transceiver 502 such that the adapter is able to receive data. The signal ADPSTR from the OR gate 522 is also passed through the OR gate 523 to enable the transceiver. Data made available on the lines DMDTTX is thus available at the input of the internal control register 536 on lines DTBUS. Thereafter, on the upper data strobe, the control signal FRMCNT passes through an AND gate 538 to latch the data into the internal control register 536. Then, in a subsequent assertion of control signals which assert signal CMSTEN, and with the signal DMREAD properly set, the multiplexer 534 is enabled through AND gate 540 to apply the status information dictated by the data stored in the internal control register 536 back through the transceiver 502.

Note that the signal CMSTEN is used to both latch the register 504 and to enable the multiplexer 534. With the DMREAD signal set for writing data into the adapter, the direct signal is such that data passes through the transceiver 502 into the adapter, and the CMSTEN signal is gated to the command register 502. However, with the DMREAD signal inverted, the direct signal causes transfer of data back to the UPC through a transceiver 502, and the control signal CMSTEN is gated to the multiplexer 534.

During initial start-up, the signal DMCLRX from the microprocessor 301 through control decoders 314 and through the logic 530 on the adapter causes the adapter to be reset to an initial state. As part of that initial state, the internal control register 536 is reset by ADPCLR to set the output STATS at zero. During an initial adapter to UPC status transfer using the control signal CMSTEN, a hardwired identifier input applied to the zero input of the multiplexer 534 is read back through the transceiver to the UPC. Based on that identifier code, the microprocessor 301 loads the DRAM 303 with the RAMWARE required to handle the identified adapter.

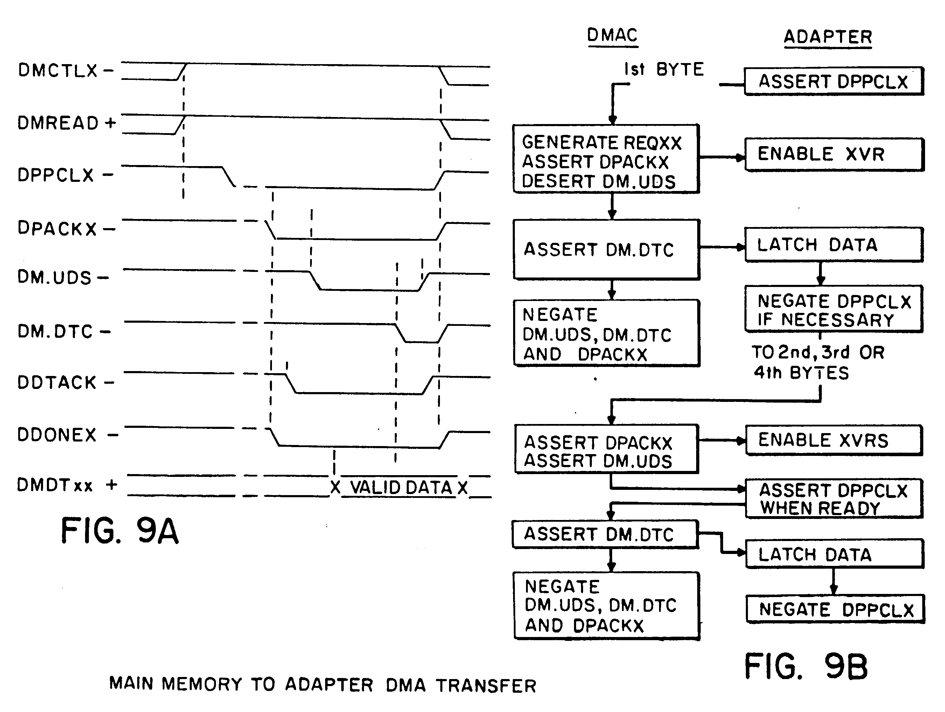

Data may be latched into the data register 506 rather than the command register 504 during a MPU cycle of the sequence controller 350. The register is latched by means of a control signal CNTSER which is strobed through an AND gate 526 by the data strobe and applied through an OR gate 528 to the input of the register 506. However, data is more usually applied to the data register 506 in a DMA operation illustrated by the timing diagram of Figure 9A and the flowchart of Figure 9B.

In a DMA operation from main memory, the adapter indicates to the UPC that it is able to receive data by asserting its signal DPPCLX after being set up by the microprocessor. The DPPCLX signal is asserted by adapter logic 530 which responds to the fill status of the FIFO 510 and a busy signal BUSYFC received through a receiver 532 from the peripheral device. Sequencer control 350 responds to assertion of the DPPCLX signal from the adapter to allot that adapter and its associated DMA controller 305, 306 a cycle in its turn by asserting a request signal REQXX. The DMAC, previously set up by the microprocessor 301 of the UPC, asserts the acknowledge signal DPACK through the OR gate 523 to enable the transceiver 502. The DMAC also sets the DMREAD signal to establish the direction input to the transceiver 502. When the signal DMDTC is asserted by the DMA controller through AND gate 525, the data which is available from the global bus through the transceiver 502 is strobed into the data register 506. That data is subsequently passed through the FIFO 510, write register 512 and driver 514 to the peripheral device.

For each of the four sequential bytes to be transferred during a DMA operation, the DMAC asserts the acknowledge and strobe signals DPACKX and DM.UDS. If the adapter requires additional time to receive the subsequent byte, it negates the DPPCLX signal until it is ready. Alternatively, the adapter may maintain the DPPCLX signal so that the adapter receives the subsequent bytes as quickly as the DMAC is able to forward them. In either case, with the DPPCLX signal asserted by the adapter, the DMAC again asserts the DPACK, DM.UDS and DM.DTC signals to latch the subsequent bytes into the data register. Finally, once the UPC has transferred four bytes, it negates the REQXX signal to that adapter, and no further transfers are made during that cycle of the adapter.

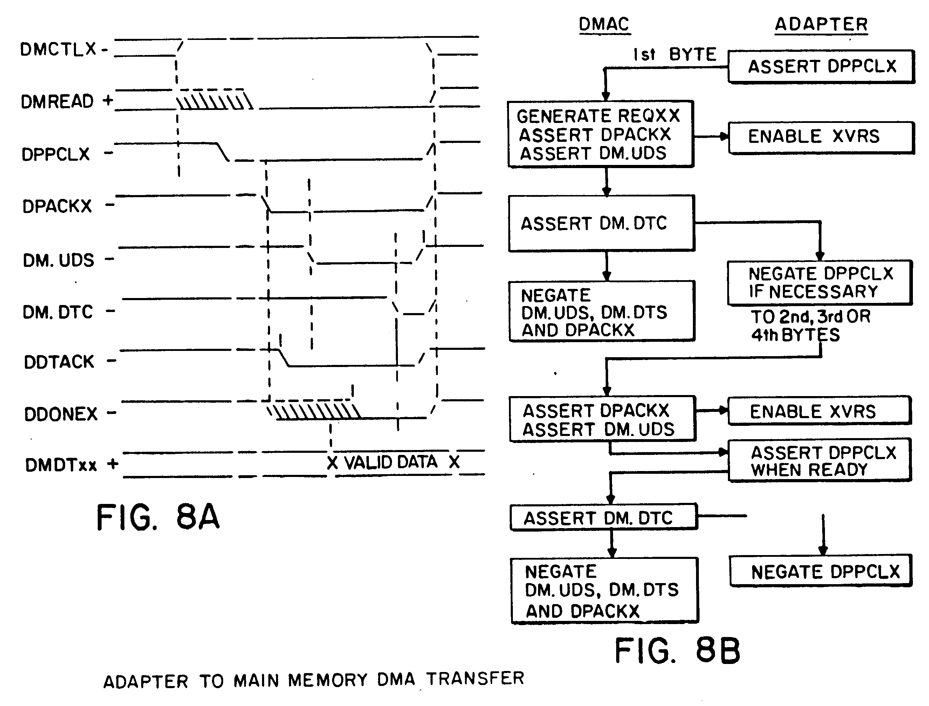

A data transfer under DMA control from the peripheral device through the adapter to main memory is illustrated in Figures 8A and 8B. In such a data transfer, data from the peripheral is received through a receiver 544 and is latched into a first read register 546 by a signal from the logic 530. The data passes through the FIFO 510 to a second set of read registers 548. Read registers 548 assemble the successive bytes of data into 16-bit words of data. The data from register 548 is made available through the transceiver 502 to the global bus during the DMA transfer.

The microprocessor 301 asserts control signals DMCTLX, ENABLX and DMREAD signals which set up the adapter internal control logic 530 for a DMA transfer to main memory. With sufficient data available in the register 548 and FIFO 510, the adapter asserts the DPPCLX signal. In response to that signal, the sequence controller 350 generates the REQXX signal for that adapter and its associated DMAC at the adapter's turn in the sequence. With assertion of DPACKX and DM.UDS by the DMAC controlling the operation, the data from register 548 is transferred through the transceiver 502. That data is latched into MY DATA REGISTER 321 upon assertion of the DMTC signal by the DMAC. If the adapter is able to latch the next two bytes into the register 548, prior to the next transfer cycle by DPACKX and DM.UDS, the DPPCLX signal may be maintained. Otherwise, it is negated until the data is ready. Depending on whether the particular adapter is able to transfer one or two bytes simultaneously, the DMA will again assert DPACK and DM.UDS once more for a second word transfer or three more times for successive byte transfers. Once four bytes of data are transferred, the REQXX signal is negated to terminate that cycle of DMA transfer. Because the strobe to the read register 548 is conditioned on REQXX, data will not continue to be strobed into the read register, but will be held in the FIFO until the next assertion of REQXX.

A data path is also provided between the FIFO 510 and inputs to the multiplexer 534. This data path is used during a data wrap diagnostic procedure. In that procedure, the UPC transfers data into the data register 506 and FIFO 510 and then, through data stored in the internal control register 536 to select the proper input to the multiplexer 534, transfers the data from the FIFO back to the UPC.

It will be recognized that the adapter of Figure 5 is merely illustrative of a possible adapter design. In fact, because the universal peripheral controller 209 deals with the adapter under RAMWARE control which is designed by the designer of the adapter, the UPC offers great flexibility in its command sequences and thus the transfer of data to or from the adapter. It is important that the adapter be able to respond to the DMCTL, ENABL, DMREAD and REQXX signals, in particular, to enable its own registers to strobe with upper data and/or lower data strobes. It is also important that, during a DMA operation, the adapter be able to interrupt the transfer of data under control of the UPC after the transfer of four bytes of data in either direction. Further, to provide the flexibility of adapter design, the UPC must be able to select the appropriate RAMWARE for that adapter from its device specific files after identification of the adapter. To that end, the adapter must be able to transfer its identifier code with the initial read of status information from the adapter after initialization of the adapter.

While the invention has been particularly shown and described with reference to a preferred embodiment thereof, it will be understood by those skilled in the art that various changes in form and details may be made therein.

## Claims

1. A peripheral device control unit for use in a data processing system of the type which includes a main processor unit (10̸6), a main memory unit (10̸2, 10̸4) and a plurality of peripheral devices (213-215), said system being of the type wherein said processor unit and main memory unit are coupled to a system bus (10̸0̸) which provides a path for communication among said processor unit, main memory unit and other units which may be coupled to said bus; said peripheral device control unit being coupled between said bus and said peripheral devices to enable communication over said bus between each of said peripheral d vices and other units coupled to said bus; said peripheral device control unit being **characterized by**:
a controller (20̸9), said controller being coupled to said system bus and comprising a processor (30̸1), a sequencer (350̸), and a direct memory access DMA element (30̸5, 30̸6);
a plurality of adapters (212A-D), each adapter being coupled between a respective one of said peripheral devices and said controller, each adapter comprising a data buffer (510̸), each adapter receiving data units from the respective device and accumulating said received data units in the data buffer thereof for subsequent transfer to said system bus, each adapter accumulating data units received from said system bus in the data buffer thereof for subsequent transfer to the respective device, each adapter generating a request signal (DPPCLX) only when the data buffer thereof is available for a data transfer operation with said system bus;
said sequencer cyclically polling each adapter to enable said adapter to transfer with said system bus a limited number of data units during the interval when said adapter is being polled;
said DMA element being coupled to receive said request signal of each of said adapters during the respective polling interval and for responding to said request signal to generate an acknowledgement signal (DPACKX);
each adapter being coupled to receive and respond to said acknowledgement signal to enable the transfer of said limited number of data units between said system bus and the data buffer thereof during the respective polling interval.

2. The peripheral device control unit of claim 1, wherein said peripheral device control unit is further characterized by said processor (30̸1) transmitting control signals to said DMA element (305,306) and adapters (212A-D) to configure said peripheral device control unit for a particular kind of DMA communication between said system bus (100) and each of said adapters (212A-D).

## Patentansprüche

1. Periphere Vorrichtungssteuereinheit zur Verwendung in einem Datenverarbeitungssystem des Typs, welcher eine Hauptprozessoreinheit (106), eine Hauptspeichereinheit (102, 104) und eine Vielzahl peripherer Vorrichtungen (213-215) aufweist, wobei das System von einem Typ ist, bei dem die Prozessoreinheit und die Hauptspeichereinheit mit einem Systembus (100) gekoppelt sind, welcher einen Kommunikationsweg zwischen der Prozessoreinheit, der Hauptspeichereinheit und anderen Einheiten bereitstellt, welche an den Bus gekoppelt sein können; wobei die periphere Vorrichtungssteuereinheit zwischen dem Bus und den peripheren Vorrichtungen gekoppelt ist, um eine Kommunikation über den Bus zwischen jeder der peripheren Vorrichtungen und anderen mit dem Bus gekoppelten Einheiten zu ermöglichen; wobei die periphere Vorrichtungssteuereinheit gekennzeichnet ist durch:
einen Controller (209), wobei der Controller mit dem Systembus gekoppelt ist und einen Prozessor (301), eine Ablaufsteuereinheit (350) und ein DMA-Element (305, 306) für Direktspeicherzugriff aufweist;
eine Vielzahl von Adaptern (212A-D), wobei jeder Adapter jeweils zwischen einer der peripheren Vorrichtungen und dem Controller gekoppelt ist, wobei jeder Adapter einen Datenpuffer (510) aufweist, wobei jeder Adapter Dateneinheiten von der jeweilige Vorrichtung empfängt und die empfangenen Dateneinheit in dessen Datenpuffer zum darauffolgenden Transfer an den Systembus sammelt, wobei jeder Adapter Dateneinheiten, die vom Systembus empfangen sind, in dessen Datenpuffer zum nachfolgenden Transfer an die jeweilige Vorrichtung sammelt, wobei jeder Adapter ein Anforderungssignal (DPPCLX) nur dann ausgibt, wenn dessen Datenpuffer für eine Datentransferoperation mit dem Systembus verfügbar ist;
wobei die Ablaufsteuereinheit zyklisch jeden Adapter abfragt, um den Adapter zu befähigen, eine begrenzte Anzahl von Dateneinheit mit dem Systembus während des Intervalls zu transferieren, wenn der Adapter abgefragt wird;
wobei das DMA-Element gekoppelt ist, um das Anforderungssignal jedes Adapters während des jeweiligen Abfrageintervalls zu empfangen und um auf das Anforderungssignal anzusprechen, um ein Bestätigungssignal (DPACKX) zu erzeugen;
wobei jeder Adapter so gekoppelt ist, um das Bestätigungssignal zu empfangen und darauf anzusprechen, um den Transfer der begrenzten Anzahl von Dateneinheiten zwischen dem Systembus und dessen Datenpuffer während des jeweiligen Abfrageintervalls zu ermöglichen.

2. Periphere Vorrichtungssteuereinheit gemäß Anspruch 1, wobei die periphere Vorrichtungssteuereinheit weiterhin durch einen Prozessor (301) gekennzeichnet ist, welcher Steuersignale an das DMA-Element (305, 306) und die Adapter (212A-D) überträgt, um die periphere Vorrichtungssteuereinheit für eine bestimmte Art von DMA-Kommunikation zwischen dem Systembus (100) und jedem der Adapter (212A-D) zu konfigurieren.

## Revendications

1. Unité de commande d'appareil périphérique destinée à être utilisée dans un système de traitement de données du type comprenant une unité de processeur principale (106), une unité de mémoire principale (102, 104) et une pluralité d'appareils périphériques (213-215), ledit système étant du type dans lequel lesdites unité de processeur et unité de mémoire principale sont couplées à un bus de système (100) procurant un chemin de communication entre lesdites unité de processeur, unité de mémoire principale et les autres unités qui peuvent être couplées audit bus ; ladite unité de commande d'appareil périphérique étant couplée entre ledit bus et lesdits appareils périphériques afin de permettre une communication à travers ledit bus entre chacun desdits appareils périphériques et les autres unités couplées audit bus; ladite unité de commande d'appareil périphérique étant caractérisée par :
un contrôleur (209), ledit contrôleur étant couplé audit bus de système et comprenant un processeur (301), un séquenceur (350) et un élément DMA d'accès direct à la mémoire (305, 306) ;
une pluralité d'adapteurs (212A-D), chaque adapteur étant couplé entre l'un respectif desdits appareils périphériques et ledit contrôleur, chaque adapteur comprenant une mémoire tampon de données (510), chaque adapteur recevant des unités de données provenant de l'appareil respectif et accumulant lesdites unités de données reçues dans sa mémoire tampon de données en vue d'un transfert ultérieur vers ledit bus de système, chaque adaptateur accumulant des unités de données reçues du bus de système dans sa mémoire tampon de données en vue d'un transfert ultérieur vers le dispositif respectif, chaque adapteur générant un signal de demande (DPPCLX) uniquement lorsque sa mémoire tampon de données est disponible pour une opération de transfert de données avec ledit bus de système ;
ledit séquenceur interrogeant cycliquement chaque adapteur afin de permettre audit adapteur de transférer avec ledit bus de système un nombre limité d'unités de données durant un intervalle au cours duquel ledit adapteur est interrogé ;
ledit élément DMA étant couplé pour recevoir ledit signal de demande de chacun desdits adapteurs au cours de l'intervalle d'interrogation respectif et pour répondre audit signal de demande pour générer un signal de confirmation (DPACKX) ;
chaque adapteur étant couplé pour recevoir et répondre audit signal de confirmation afin de permettre le transfert dudit nombre limité d'unités de données entre ledit bus de système et sa mémoire tampon de données au cours de l'intervalle d'interrogation respectif.

2. Unité de commande d'appareil périphérique selon la revendication 1, dans laquelle ladite unité de commande d'appareil périphérique est en outre caractérisée par ledit processeur (301) transmettant des signaux de commande auxdits élément DMA (305, 306) et adapteurs (212A-D) afin de configurer ladite unité de commande d'appareil périphérique pour un type particulier de communication DMA entre ledit bus de sytème (100) et chacun desdits adapteurs (212A-D).
